# EUROPEAN PATENT SPECIFICATION

(11) **EP 3 974 165 B1**
(45) Date of publication and mention of the grant of the patent: **05.07.2023**
(21) Application number: 20275145.9
(22) Date of filing: 23.09.2020
(51) Int. Cl.: B29D 99/00, E04C 3/02, E04C 3/38, E04C 3/46, E04G 21/18, B29L 31/10

(54) **AN ARCH FORMER**
BOGENFORMER
DISPOSITIF DE FORMATION D'ARC

(43) Date of publication of application: 30.03.2022
(73) Proprietor: Mason, Colin Eric, Ludlow, Shropshire SY8 4WA (GB)
(72) Inventor: Mason, Colin Eric, Ludlow, Shropshire SY8 4WA (GB)
(74) Representative: Barker Brettell LLP

(56) References cited:
- EP-A1- 2 483 493
- WO-A1-2008/027141
- GB-A- 2 063 953
- GB-A- 2 405 438
- GB-A- 2 447 534
- US-A- 5 671 583
- US-A1- 2006 059 859
- US-B2- 10 407 895

## Description

### Field of the Invention

The present disclosure relates to arch formers, and in particular, but not exclusively, to masonry arch formers.

### Background

It is known to provide an arch former when constructing a masonry arch and in particular when constructing a masonry arch comprising brickwork. The arch former is arranged to provide support for the brickwork during construction of the arch. Once completed, the arch former is no longer required as a weight bearing member but is typically left in situ and used for aesthetic features.

Such arch formers are typically used in the construction of arches over openings such as windows or doors.

Known arch formers often comprise a body formed or moulded integrally, or a plurality of components which must then be affixed together. Such arch formers typically comprise plastic portions that require forming by means of moulding or extruding. Some of the components are assembled from larger extrusions of material and then machined and cut to size. In order to manufacture such arch formers comprising different dimensions, a variety of different moulds and/or tools are required. This is an expensive requirement, and when machining from extruded sections, wasteful of materials and time consuming.

Known arch formers are typically fully fabricated prior to shipping to the end user. Storing and transporting known arch formers is expensive due to the low size to weight ratio. Manufacturing such arch forms is expensive due to the processing and tools required, and the subsequent assembly.

It is therefore an aim of the present invention to overcome, or at least mitigate, some of the above mentioned drawbacks.

Patent application No. GB 2 063 953 A discloses an arch support, which comprises a unitary body. The arch support has an arcuate top surface and a segmental front face. The base of the arch support has inwardly turned flanges and a drip lip at the lower end of the front face. Another arch support is disclosed in patent application No. GB 2 447 534 A.

### Summary of the Invention

In accordance with a first aspect of the invention, there is provided an arch former comprising: a planar elongate base, having two longitudinally extending grooves spaced apart, and at least one aperture arranged at each end; two side panels, wherein each side panel comprises a straight bottom edge and a curved top edge; and a top section, formed as an elongate panel arranged to extend over the curved top edges of the side panels and comprising a locking means disposed at each end arranged to cooperate with the at least one aperture arranged at each end of the base, and two longitudinally extending grooves spaced apart; wherein each groove of the base is configured to receive at least a portion of the bottom edge of one of the side panels, and wherein each groove of the top section is arranged to receive at least a portion of the top edge of one of the side panels.

The arch former may be configured to be positioned upon a lintel spanning across an opening such as a window, a door, or the like. The arch former may be suitable for forming a masonry arch.

Advantageously, an arch former in accordance with the first aspect of the invention may be easier and/or cheaper to manufacture, transport and/or store.

The planar elongate base may comprise an extruded planar elongate member. The base may comprise a substantially similar cross-section along the entire length. The base may comprise any suitable length. Typically, the base may comprise a length of between 500mm and 5000mm. Advantageously, by comprising an extruded planar elongate member, the base may easily be formed to any required length without the need for moulds or tooling of different dimensions.

The base may comprise any material suitable to be extruded. The base may comprise a polymer. The base may comprise acrylonitrile-butadine-styrene, acrylic, ethylene-vinyl-acetate, polyvinyl chloride, high or low density polyethylene, polycarbonate, polypropylene or polyurethane. The base may comprise unplasticized polyvinyl chloride (uPVC). The base may comprise any suitable thickness. The base may comprise a thickness of up to or including 1mm, 1.5mm, 2mm, 2.5mm, or over 2.5mm. The base may comprise a thickness of approximately 2mm.

The longitudinally extending grooves may extend from near to or at a first end of the base to near to or at a second end of the base. The longitudinally extending grooves may extend across the entire length of the base. The grooves may comprise a rectangular cross-section. The grooves may comprise any suitable width and depth. The grooves may comprise a width of approximately 3.5mm. The grooves may comprise a depth of approximately 6mm.

The grooves may be substantially parallel. Each groove may be disposed near to or at an opposing side edge of the base. Each groove may be substantially similar.

The base may comprise a lip portion, or the like, disposed on at least one side edge, wherein said lip portion may be arranged to extend down from the side edge. The lip portion may be arranged to extend over and/or along a side of a lintel upon which the base may be located. The lip portion may be arranged to limit movement in at least one lateral direction. In some embodiments, the base may comprise two lip portions disposed at opposing side edges.

The base may comprise at least one aperture disposed near to each end. Each aperture may be substantially similar. Each aperture may comprise an elongate configuration, and may be disposed substantially centrally between the two longitudinal grooves. The apertures may extend from near to a first groove to near to a second groove. The apertures may be arranged such that their length runs substantially perpendicular to the longitudinal grooves. At least one aperture may comprise a narrow elongate slot. At least one aperture may be arranged to receive at least a portion of the top section.

The straight bottom edge of each side panel may comprise a length shorter than the length of the base. The straight bottom edge may extend along the length of each side panel from a first bottom corner to a second bottom corner. The curved top edge of each side panel may extend from near to or at the first corner to near to or at the second corner. The curved top edge may comprise any suitable curve dimensions. The curved top edge may comprise a symmetrical curve wherein a peak is located halfway between the first and second bottom corners.

Each side panel may comprise a laminate structure. The side panels may comprise two exterior panels each comprising a polymer. The exterior panels may comprise polyvinyl chloride. The two exterior panels may be separated by a core. The core may comprise a foam, such as an expanded foam.

Additionally alternatively, the side portions can be formed of a metal material, such as aluminium.

Each side panel may comprise a single sheet of material. Each side panel may be cut from a sheet of material.

The top section may comprise an extruded elongate member. The top section may comprise a substantially similar cross-section along the entire length. The top section may comprise any suitable length. The top section may be arranged such that it is operable to form a curved configuration. Advantageously, by comprising an extruded planar elongate member, the top section may easily be formed to any required length without the need for moulds or tooling of different dimensions.

The top section may comprise any material suitable to be extruded. The top section may comprise a polymer. The top section may comprise acrylonitrile-butadine-styrene, acrylic, ethylene-vinyl-acetate, polyvinyl chloride, high or low density polyethylene, polycarbonate, polypropylene or polyurethane. The top section may comprise unplasticized polyvinyl chloride (uPVC). The top section may comprise any suitable thickness. The top section may comprise a thickness of up to or including 1mm, 1.5mm, 2mm, 2.5mm, or over 2.5mm. The top section may comprise a thickness of approximately 1mm. The top section may comprise a thinner material than the base.

The two longitudinal grooves of the top section may extend from near to or at a first end of the top section to near to or at a second end. The grooves may comprise a rectangular cross-section. The grooves may comprise any suitable width and depth. The grooves may comprise a width of approximately 3.5mm. The grooves may comprise a depth of approximately 6mm.

The grooves may be arranged to from a press fit connection with at least a portion of the side panels. The edges of the side panels may be arranged to be received within the grooves such that a seal is formed, wherein the seal substantially prevents ingress of dirt, moisture or the like. The grooves in the top section may be arranged such that they are spaced apart by substantially the same distance as the grooves in the base. In this way, the side panels may be secured between the base and the top section in a vertical orientation, potentially without adhesive or welding.

The top section may comprise one or more locking means. The top section may comprise a locking means disposed at each end. The locking means may comprise clips, clamps, projections or the like. The locking means may comprise one or more members extending from each end of the top section. The locking means may comprise one or more resiliently biased projections. The locking means may comprise one or more members arranged such that they are resiliently biased towards a locking configuration. The locking means may comprise one or more portions arranged to cooperate with the apertures or slots disposed near to or at each end of the base. The locking means may be configured such that they can extend at least partially through the one or more apertures and form a connection with the base.

The arch former may comprise further means suitable for forming a connection between the base and the top section. The further means may be operable to form a substantially permanent, or a detachable connection, between the top section and the base. The further means may comprise cable ties, or the like. The projecting members of the top section may comprise an aperture through which a cable tie may pass.

In use the base, the top section and the side panels may be assembled by a user. Advantageously, this allows the components to be stored and transported in a disassembled configuration. In a disassembled condition each component may be positioned substantially horizontally, in a "flat-pack" configuration, therefore requiring significantly less space than an assembled arch former.

In use, the base may be positioned horizontally. The base may be positioned on top of a lintel. The side panels may then be positioned such that the straight edges are at least partially received within the grooves in the base such that the side panels are affixed substantially perpendicular to the base. The top section may then be positioned over the side panels such that at least a portion of the curved top edge of each panel is received by a separate groove in the top section.

The locking means may be used to affix the top section to the base. The locking means disposed at each end of the top section may be inserted through the one or more apertures disposed at each end of the base. The one or more resiliently biased projections may be operable to bend in towards a central longitudinal axis with the application of an inwards force applied either by hand or by the interior sides of the apertures. Such bending may allow the projections to pass through the aperture in the base. The top section may be of a width such that only the projecting members are operable to pass through the one or more apertures at each end of the base. The one or more resiliently biased projections may then return to their original configuration once the force is removed. This may provide a locking arrangement wherein the projections cannot be moved back through the apertures without further application of a force on the resiliently biased members.

The arch former may define a void between the base, the side panels and the top section. The void may be at least partially filled with insulation.

According to a second aspect of the invention there is provided a method of manufacture of an arch former of the first aspect of the invention.

The method of manufacture of the arch former comprises;
extruding a planar elongate base having two longitudinally extending grooves spaced apart and at least one aperture arranged at each end;
forming two side panels, wherein each side panel comprises a straight bottom edge and a curved top edge;
extruding a top section formed as an elongate panel arranged to extend over the curved top edges of the side panels and comprising a locking means disposed at each end arranged to cooperate with the at least one aperture arranged at each end of the base; and
assembling the arch former such that each groove of the base receives at least a portion of the bottom edge of one of the side panels, each groove of the top section receives at least a portion of the top edge of one of the side panels and the locking means disposed at each end of the top section forms a connection with the at least one aperture arranged at each end of the base.

The step of extruding the base may comprise extruding the base until a desired length has been extruded, and then simultaneously cutting the base to the desired length and forming at least one of the at least one apertures in the base. As such, the base can be cut and the aperture formed in one step, which is an efficient form of manufacture, and avoids having to rely on stock lengths of pre-extruded material.

According to a third aspect of the invention there is provided a kit of parts such that the parts may be arranged to form an arch former as claimed in the first aspect of the invention.

The kit of parts according to the third aspect of the invention comprises: a planar elongate base having two longitudinally extending grooves spaced apart and at least one aperture arranged at each end; two side panels, wherein each side panel comprises a straight bottom edge and a curved top edge; and a top section, formed as an elongate panel arranged to extend over the curved top edges of the side panels and comprising a locking means disposed at each end arranged to cooperate with the at least one aperture arranged at each end of the base, and two longitudinally extending grooves spaced apart; wherein each groove of the base is configured to receive at least a portion of the bottom edge of one of the side panels, and wherein each groove of the top section is arranged to receive at least a portion of the top edge of one of the side panels.

### Detailed Description

The invention is described in further detail below by way of example and with reference to the accompanying drawings, in which:

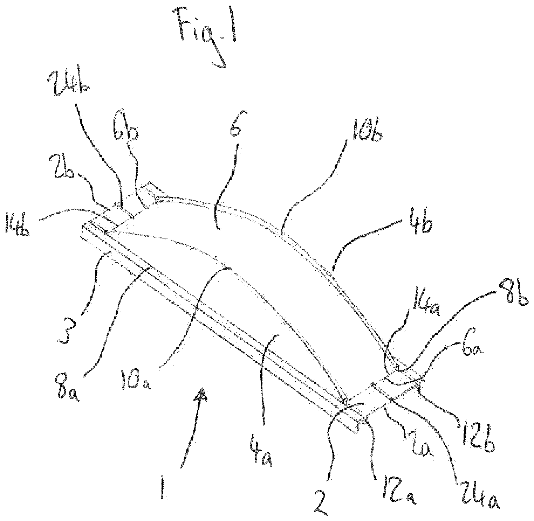

**Figure 1** is a perspective view of the arch form in accordance with an embodiment of the invention;

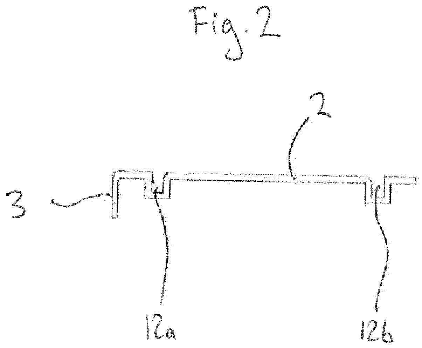

**Figure 2** is a cross-sectional view of the base in accordance with an embodiment of the invention;

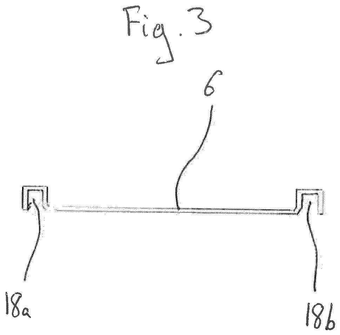

**Figure 3** is a cross-sectional view of the top section in accordance with an embodiment of the invention;
**Figure 4** is a top view of an end region of the base in accordance with an embodiment of the invention;
**Figure 5** is a top view of an end region of the top section in accordance with an embodiment of the invention; and

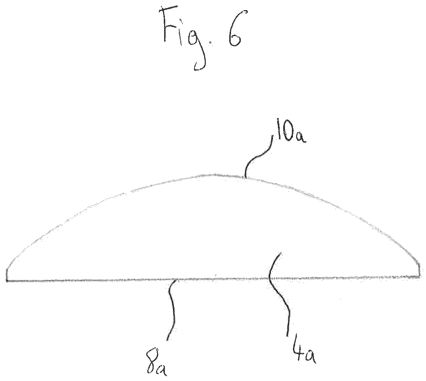

**Figure 6** is a front view of a side panel.

The accompanying drawings show an arch former 1 in accordance with a first aspect of the invention comprising a base 2, a first side panel 4a, a second side panel 4b and a top section 6.

The base 2 comprises an elongate planar member arranged substantially horizontally, in use. The two side panels 4a, 4b comprise planar members comprising a straight bottom edge 8a, 8b and an arcuate top edge 10a, 10b, and are arranged perpendicular to the base 2. The top section 6 comprises an elongate member arranged over the arcuate edges 10a, 10b of the side panels 4a, 4b.

In some embodiments, the base 2 comprises a lip 3 disposed along a side edge. In the embodiment shown, the lip 3 extends vertically down from a front facing side edge.

The base 2 comprises a first longitudinally extending groove 12a and a second longitudinally extending groove 12b. Each groove 12a, 12b extends from a first end 2a of the base 2 to a second end 2b. The grooves 12a, 12b are spaced apart and disposed substantially near to opposing side edges of the base 2.

The first groove 12a is configured to receive at least a portion of the straight edge 8a of the first side panel 4a. The second groove 12b is configured to receive at least a portion of the straight edge 8b of the second side panel 4b. The grooves 12a, 12b are configured such that they assist in maintaining the side panels 4a, 4b orientated substantially perpendicular to the base 2. In some embodiments, the grooves 12a, 12b are arranged such that a press fit connection is formed when at least a portion of the straight edge 8a, 8b of the corresponding side panel 4a, 4b is received by each of the grooves 12a, 12b. Upon receiving at least a portion of the straight edge 8a, 8b of a side panel 4a, 4b, each groove 12a, 12b may act as a seal configured to substantially prevent ingress of dirt, liquids or the like.

In some embodiments, the side panels 4a, 4b comprise substantially similar dimensions such that they are interchangeable. This allows for the flexibility to have the side panels of different colours or finishes.

The straight edge 8a, 8b of each side panel 4a, 4b extends across the entire length of each side panel 4a, 4b. Each side panel 4a, 4b comprises a substantially similar length to the opposing side panel 4a, 4b. Each side panel 4a, 4b comprises a length that is shorter than the length of the base 2. The arcuate top edge 10a, 10b of each side panel 4a, 4b extends across a substantial portion of or the entire length of each side panel 4a, 4b, extending from a first end of the straight edge 8a, 8b to an opposing end. In embodiments, the arcuate top edges 10a, 10b may comprise any suitable curved arrangement. Typically, the arcuate top edges 10a, 10b comprise a peak at a substantially central point along the length of the side panels 4a, 4b.

The top section 6 comprises an elongate panel arranged to extend over the arcuate top edge 10a, 10b of the side panels 4a, 4b. The top section 6 is configured such that the curve of the top section 6 is defined by the arcuate top edges 10a, 10b of the side panels 4a, 4b.

The top section 6 comprises a first longitudinal groove 18a and a second longitudinal groove 18b. Each of the longitudinal grooves 18a, 18b extend from a first end 6a of the top section 6 to a second end 6b. The two grooves 18a, 18b are spaced apart and each groove 18a, 18b is disposed near to a side edge of the top section 6.

The first groove 18a disposed on the top section 6 is configured to receive at least a portion of the arcuate top edge 10a of the first side wall 4a. The second groove 18b disposed on the top section 6 is configured to receive at least a portion of the arcuate top edge 10b of the second side panel 4b.

The first groove 18a of the top section 6 is configured to receive at least a portion of the arcuate edge 10a of the first side panel 4a. The second groove 18b is configured to receive at least a portion of the arcuate edge 10b of the second side panel 4b. The grooves 18a, 18b are configured such that they assist in maintaining the side panels 4a, 4b orientated substantially perpendicular to the base 2. In some embodiments, the grooves 18a, 18b are arranged such that a press fit connection is formed when at least a portion of the arcuate edge 10a, 10b of the corresponding side panel 4a, 4b is received by the groove 18a, 18b. Upon receiving at least a portion of the arcuate edge 10a, 10b of a side panel 4a, 4b, each groove 18a, 18b may act as a seal configured to substantially prevent ingress of dirt, liquids or the like.

The two grooves 12a, 12b of the base 2 are spaced apart by substantially the same distance as the two grooves 18a, 18b of the top section 6. The arrangement of the grooves 12a, 12b, 18a, 18b in this way assists in maintaining the side panels 4a, 4b orientated substantially perpendicular to the base, in use.

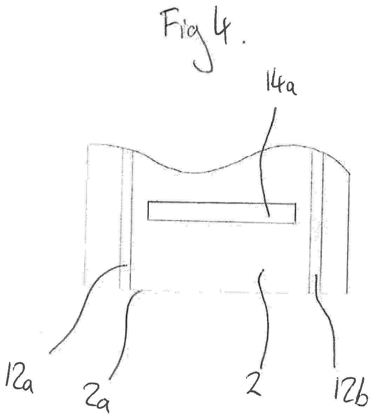

The base 2 further comprises two slots 14a, 14b, each slot 14a, 14b being disposed near to an opposing end 2a, 2b of the base 2. Each slot 14a, 14b comprises a narrow, elongate aperture extending perpendicularly to the longitudinal axis of the base 2. The slot 14a is shown in Figure 4, disposed near to the first end 2a of the base 2. Each slot 14a, 14b is arranged to extend between the two grooves 12a, 12b.

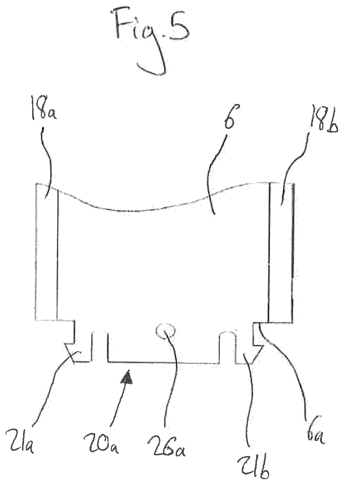

The top section 6 comprises a first locking means 20a disposed at the first end 6a and a second locking means (not shown) disposed at the second end 6b. The locking means 20a disposed at the first end 6a of the top section 6 is shown in Figure 5. The locking means 20a protrudes from the first end 6a of the top section 6.

The locking means 20a comprises two latch members 21a, 21b disposed on either side of the main body of the locking means 20a. Each latch member 21a, 21b is operable to move towards the centre of the locking means 20a upon the application of a lateral force. Each latch member 21a, 21b is resiliently biased to return to a pre-determined position, as shown in Figure 5, when no external force is applied.

The latch members 21a, 21b comprise lateral protrusions arranged such that the width of the locking means 20a is wider than the internal width of the slot 14a when no force is applied to the latch members 21a, 21b. Upon application of a lateral force to the outer sides of each latch member, 21a, 21b, the latch members 21a, 21b may be urged towards the centre of the locking means 20a such that the locking means 20a comprises a width less than or equal to the internal width of the slot 14a.

The locking means 20a is operable to form a connection with the slot 14a. A user may manually urge the locking means 20a through the slot 14a such that a lateral force is applied by the interior walls of the slot 14a to the latch members 21a, 21b such that the locking means 20a may pass through. Once through the slot 14a, the latch members 21a, 21b may automatically bias back to the pre-determined configuration prior to the application of a lateral force such that the width of the locking means 20a now exceeds the width of the slot 14a. In this configuration, the locking means 20a is prevented from passing back through the slot 14a and thus forming a connection between the top section 6 and the base 2.

It should be understood that the arrangement at the opposing end, second end of the base 2b and second end of the top section 6b, comprises a substantially similar arrangement suitable for forming a connection by the same means.

The arch former 1 further comprises an additional securing means disposed at each end. The additional securing means in the embodiment shown comprises a cable tie 24a, 24b. Each of the cable ties 24a, 24b passes through a corresponding aperture 26a disposed near to an end region of the top section 6. The cable ties 24a, 24b extend around the ends 2a, 2b of the base 2 and form a secure connection between the base 2 and the top section 6.

The top section 6, base 2 and side portions between themselves define a void. This void can be at least partially filled with insulating material, such as an insulating foam.

Other embodiments are intentionally within the scope of the invention as defined by the appended claims.

## Claims

1. An arch former (1) for a masonry arch comprising:
a planar elongate base (2), having two longitudinally extending grooves (12a, 12b) spaced apart, and at least one aperture arranged at each end (2a, 2b);
two side panels (4a, 4b), wherein each side panel comprises a straight bottom edge (8a, 8b) and a curved top edge (10a, 10b); and
a top section (6)
, formed as an elongate panel arranged to extend over the curved top edges (10a, 10b) of the side panels (4a, 4b) and comprising a locking means (20a) disposed at each end (6a, 6b) arranged to cooperate with the at least one aperture arranged at each end (2a, 2b) of the base (2), and two longitudinally extending grooves (18a, 18b) spaced apart;
wherein each groove (12a, 12b) of the base (2) is configured to receive at least a portion of the bottom edge (8a, 8b) of one of the side panels (4a, 4b), and wherein each groove (18a, 18b) of the top section (6) is arranged to receive at least a portion of the top edge (10a, 10b) of one of the side panels (4a, 4b).

2. An arch former (1) as claimed in claim 1 wherein the planar elongate base (2) comprises an extruded planar elongate member.

3. An arch former (1) as claimed in any previous claim wherein the base (2) comprises a polymer.

4. An arch former (1) as claimed in any previous claim wherein the base (2) comprises at least one aperture disposed near to each end (2a, 2b).

5. An arch former (1) as claimed in any previous claim wherein each aperture comprises a narrow elongate slot (14a, 14b).

6. An arch former (1) as claimed in any previous claim wherein at least one aperture is arranged to receive at least a portion of the top section (6).

7. An arch former (1) as claimed in any previous claim wherein the straight bottom edge (8a, 8b) of each side panel (4a, 4b) comprises a length shorter than the length of the base (2).

8. An arch former (1) as claimed in any previous claim wherein the top section (6) comprises an extruded elongate member.

9. An arch former (1) as claimed in any previous claim wherein the top section (6) comprises a polymer.

10. An arch former (1) as claimed in any previous claim wherein the grooves (12a, 12b, 18a, 18b) are arranged to from a press fit connection with at least a portion of the side panels (4a, 4b).

11. An arch former (1) as claimed in any previous claim wherein the top section (6) comprises one or more locking means (20a).

12. An arch former (1) as claimed in any previous claim wherein the one or more locking means (20a) comprise one or more members extending from each end (6a, 6b) of the top section (6).

13. An arch former (1) as claimed in any previous claim wherein the locking means (20a) are configured such that they can extend at least partially through the one or more apertures and form a connection with the base (2).

14. A method of manufacturing an arch former (1) comprising;
extruding a planar elongate base (2) having two longitudinally extending grooves (12a, 12b) spaced apart and at least one aperture arranged at each end;
forming two side panels (4a, 4b), wherein each side panel (4a, 4b) comprises a straight bottom edge (8a, 8b) and a curved top edge (10a, 10b);
extruding a top section (6) formed as an elongate panel arranged to extend over the curved top edges (10a, 10b) of the side panels (4a, 4b) and comprising a locking means (20a) disposed at each end (2a, 2b) arranged to cooperate with the at least one aperture arranged at each end of the base (2); and
assembling the arch former (1) such that each groove (12a, 12b) of the base (2) receives at least a portion of the bottom edge (8a, 8b) of one of the side panels (4a, 4b), each groove (18a, 18b) of the top section (6) receives at least a portion of the top edge (10a, 10b) of one of the side panels (4a, 4b) and the locking means (20a) disposed at each end (6a, 6b) of the top section (6) forms a connection with the at least one aperture arranged at each end of the base (2).

15. A kit of parts for making the arch former (1) of any of claims 1 to 13, comprising: a planar elongate base (2) having two longitudinally extending grooves (12a, 12b) spaced apart and at least one aperture arranged at each end; two side panels (4a, 4b), wherein each side panel (4a, 4b) comprises a straight bottom edge (8a, 8b) and a curved top edge (10a, 10b); and a top section (6), formed as an elongate panel arranged to extend over the curved top edges (10a, 10b) of the side panels (4a, 4b) and comprising a locking means (20a) disposed at each end arranged to cooperate with the at least one aperture arranged at each end of the base (2), and two longitudinally extending grooves (18a, 18b) spaced apart; wherein each groove (12a, 12b) of the base (2) is configured to receive at least a portion of the bottom edge (8a, 8b) of one of the side panels (4a, 4b), and wherein each groove (18a, 18b) of the top section (6) is arranged to receive at least a portion of the top edge (10a, 10b) of one of the side panels (4a, 4b).

## Patentansprüche

1. Gewölbebildende Vorrichtung (1) für ein gemauertes Gewölbe, wobei die Vorrichtung umfasst:
eine ebene längliche Basis (2) mit zwei sich in Längsrichtung erstreckenden, voneinander beabstandeten Nuten (12a, 12b) und mindestens einer an jedem Ende (2a, 2b) vorgesehenen Öffnung;
zwei Seitenpaneele (4a, 4b), wobei jedes Seitenpaneel eine gerade Unterkante (8a, 8b) und eine gekrümmte Oberkante (10a, 10b) aufweist; und
ein Oberteil (6), das als längliches Paneel zum Überspannen der gekrümmten Oberkanten (10a, 10b) der Seitenpaneele (4a, 4b) ausgebildet ist, und ein Verriegelungsmittel (20a), das an jedem Ende (6a, 6b) zum Zusammenwirken mit der mindestens einen an jedem Ende (2a, 2b) der Basis (2) ausgebildeten Öffnung angeordnet ist, und zwei sich in Längsrichtung erstreckenden, voneinander beabstandeten Nuten (18a, 18b) umfasst;
wobei jede Nut (12a, 12b) der Basis (2) so ausgebildet ist, dass sie mindestens einen Abschnitt der Unterkante (8a, 8b) einer der Seitenpaneele (4a, 4b) aufnimmt, und wobei jede Nut (18a, 18b) des Oberteils (6) so ausgebildet ist, dass sie mindestens einen Abschnitt der Oberkante (10a, 10b) einer der Seitenpaneele (4a, 4b) aufnimmt.

2. Gewölbebildende Vorrichtung (1) nach Anspruch 1, wobei die ebene längliche Basis (2) ein extrudiertes ebenes längliches Element umfasst.

3. Gewölbebildende Vorrichtung (1) nach einem der vorhergehenden Ansprüche, wobei die Basis (2) ein Polymer umfasst.

4. Gewölbebildende Vorrichtung (1) nach einem der vorhergehenden Ansprüche, wobei die Basis (2) mindestens eine Öffnung aufweist, die nahe jedem Ende (2a, 2b) angeordnet ist.

5. Gewölbebildende Vorrichtung (1) nach einem der vorhergehenden Ansprüche, wobei jede Öffnung einen schmalen länglichen Schlitz (14a, 14b) umfasst.

6. Gewölbebildende Vorrichtung (1) nach einem der vorhergehenden Ansprüche, wobei mindestens eine Öffnung zur Aufnahme mindestens eines Abschnitts des Oberteils (6) ausgebildet ist.

7. Gewölbebildende Vorrichtung (1) nach einem der vorhergehenden Ansprüche, wobei die gerade Unterkante (8a, 8b) jedes Seitenpaneels (4a, 4b) eine Länge aufweist, die kürzer ist als die Länge der Basis (2).

8. Gewölbebildende Vorrichtung (I) nach einem der vorhergehenden Ansprüche, wobei das Oberteil (6) ein extrudiertes längliches Element umfasst.

9. Gewölbebildende Vorrichtung (1) nach einem der vorhergehenden Ansprüche, wobei das Oberteil (6) ein Polymer umfasst.

10. Gewölbebildende Vorrichtung (1) nach einem der vorhergehenden Ansprüche, wobei die Nuten (12a, 12b, 18a, 18b) so ausgebildet sind, dass sie eine Presssitzverbindung mit zumindest einem Abschnitt der Seitenpaneele (4a, 4b) bilden.

11. Gewölbebildende Vorrichtung (1) nach einem der vorhergehenden Ansprüche, wobei das Oberteil (6) ein oder mehrere Verriegelungsmittel (20a) umfasst.

12. Gewölbebildende Vorrichtung (1) nach einem der vorhergehenden Ansprüche, wobei das eine oder mehreren Verriegelungsmittel (20a) ein oder mehrere Elemente umfassen, die sich von jedem Ende (6a, 6b) des Oberteils (6) erstrecken.

13. Gewölbebildende Vorrichtung (1) nach einem der vorhergehenden Ansprüche, wobei die Verriegelungsmittel (20a) so ausgebildet sind, dass sie sich zumindest teilweise durch die eine oder mehreren Öffnungen erstrecken und eine Verbindung mit der Basis (2) bilden können.

14. Verfahren zur Herstellung einer gewölbebildenden Vorrichtung (I), wobei das Verfahren die folgenden Schritte umfasst:
Extrudieren einer ebenen länglichen Basis (2) mit zwei sich in Längsrichtung erstreckenden, voneinander beabstandeten Nuten (12a, 12b) und mindestens einer an jedem Ende (2a, 2b) vorgesehenen Öffnung;
Bilden von zwei Seitenpaneelen (4a, 4b), wobei jede Seitenpaneel (4a, 4b) eine gerade Unterkante (8a, 8b) und eine gekrümmte Oberkante (10a, 10b) aufweist;
Extrudieren eines Oberteils (6), das als längliches Paneel zum Überspannen der gekrümmten Oberkanten (10a, 10b) der Seitenpaneele (4a, 4b) ausgebildet ist, und ein Verriegelungsmittel (20a), das an jedem Ende (6a, 6b) zum Zusammenwirken mit der mindestens einen an jedem Ende (2a, 2b) der Basis (2) ausgebildeten Öffnung angeordnet ist, umfasst; und
zusammenbauen der gewölbebildenden Vorrichtung (1), so dass jede Nut (12a, 12b) der Basis (2) mindestens einen Abschnitt der Unterkante (8a, 8b) einer der Seitenpaneele (4a, 4b) aufnimmt, jede Nut (18a, 18b) des Oberteils (6) mindestens einen Abschnitt der Oberkante (10a, 10b) einer der Seitenpaneele (4a, 4b) aufnimmt, und das an jedem Ende (6a, 6b) des Oberteils (6) angeordnete Verriegelungsmittel (20a) eine Verbindung mit der mindestens einen an jedem Ende der Basis (2) angeordneten Öffnung bildet.

15. Satz von Teilen zur Herstellung der gewölbebildenden Vorrichtung (1) nach einem der Ansprüche 1 bis 13, wobei der Satz umfasst: eine ebene längliche Basis (2) mit zwei sich in Längsrichtung erstreckenden, voneinander beabstandeten Nuten (12a, 12b) und mindestens einer an jedem Ende (2a, 2b) vorgesehenen Öffnung; zwei Seitenpaneele (4a, 4b), wobei jedes Seitenpaneel eine gerade Unterkante (8a, 8b) und eine gekrümmte Oberkante (10a, 10b) aufweist; und ein Oberteil (6), das als längliches Paneel zum Überspannen der gekrümmten Oberkanten (10a, 10b) der Seitenpaneele (4a, 4b) ausgebildet ist, und ein Verriegelungsmittel (20a), das an jedem Ende (6a, 6b) zum Zusammenwirken mit der mindestens einen an jedem Ende (2a, 2b) der Basis (2) ausgebildeten Öffnung angeordnet ist, und zwei sich in Längsrichtung erstreckenden, voneinander beabstandeten Nuten (18a, 18b) umfasst; wobei jede Nut (12a, 12b) der Basis (2) so ausgebildet ist, dass sie mindestens einen Abschnitt der Unterkante (8a, 8b) einer der Seitenpaneele (4a, 4b) aufnimmt, und wobei jede Nut (18a, 18b) des Oberteils (6) so ausgebildet ist, dass sie mindestens einen Abschnitt der Oberkante (10a, 10b) einer der Seitenpaneele (4a, 4b) aufnimmt.

## Revendications

1. Dispositif de formation de voûte (1) destiné à une voûte de maçonnerie, ledit dispositif comprenant :
une base allongée plane (2) comportant deux rainures qui (12a, 12b) s'étendent longitudinalement à distance l'une de l'autre, et au moins une ouverture ménagée à chaque extrémité (2a, 2b) ;
deux panneaux latéraux (4a, 4b), chaque panneau latéral comprenant un bord inférieur droit (8a, 8b) et un bord supérieur incurvé (10a, 10b) ; et
une section supérieure (6) formée comme un panneau allongé conçu pour s'étendre sur les bords supérieurs incurvés (10a, 10b) des panneaux latéraux (4a, 4b) et comprenant un moyen de verrouillage (20a) disposé à chaque extrémité (6a, 6b) et conçu pour coopérer avec l'au moins une ouverture ménagée à chaque extrémité (2a, 2b) de la base (2), et deux rainures (18a, 18b) qui s'étendent longitudinalement à distance l'une de l'autre ;
chaque rainure (12a, 12b) de la base (2) étant conçue pour recevoir au moins une portion du bord inférieur (8a, 8b) de l'un des panneaux latéraux (4a, 4b) et chaque rainure (18a, 18b) de la section supérieure (6) étant conçue pour recevoir au moins une portion du bord supérieur (10a, 10b) de l'un des panneaux latéraux (4a. 4b).

2. Dispositif de formation de voûte (1) selon la revendication 1, la base allongée plane (2) comprenant un élément allongé plan extrudé.

3. Dispositif de formation de voûte (1) selon l'une quelconque des revendications précédentes, la base (2) comprenant un polymère.

4. Dispositif de formation de voûte (1) selon l'une quelconque des revendications précédentes, la base (2) comprenant au moins une ouverture ménagée à proximité de chaque extrémité (2a, 2b).

5. Dispositif de formation de voûte (1) selon l'une quelconque des revendications précédentes, chaque ouverture comprenant une fente allongée étroite (14a, 14b).

6. Dispositif de formation de voûte (1) selon l'une quelconque des revendications précédentes, au moins une ouverture étant ménagée pour recevoir au moins une portion de la section supérieure (6).

7. Dispositif de formation de voûte (1) selon l'une quelconque des revendications précédentes, le bord inférieur droit (8a, 8b) de chaque panneau latéral (4a, 4b) comprenant une longueur plus courte que la longueur de la base (2).

8. Dispositif de formation de voûte (I) selon l'une quelconque des revendications précédentes, la section supérieure (6) comprenant un élément allongé extrudé.

9. Dispositif de formation de voûte (1) selon l'une quelconque des revendications précédentes, la section supérieure (6) comprenant un polymère.

10. Dispositif de formation de voûte (1) selon l'une quelconque des revendications précédentes, les rainures (12a. 12b. 18a. 18b) étant conçues pour former une liaison à ajustement serré avec au moins une portion des panneaux latéraux (4a, 4b).

11. Dispositif de formation de voûte (1) selon l'une quelconque des revendications précédentes, la section supérieure (6) comprenant un ou plusieurs moyens de verrouillage (20a).

12. Dispositif de formation de voûte (1) selon l'une quelconque des revendications précédentes, les un ou plusieurs verrouillage (20a) comprenant un ou plusieurs éléments qui s'étendent depuis chaque extrémité (6a, 6b) de la section supérieure (6).

13. Dispositif de formation de voûte (1) selon l'une quelconque des revendications précédentes, les moyens de verrouillage (20a) étant conçus de manière à pouvoir s'étendre au moins partiellement à travers les une ou plusieurs ouvertures à et former une liaison avec la base (2).

14. Procédé de fabrication d'un dispositif de formation de voûte (I), ledit procédé comprenant les étapes suivantes :
extruder une base allongée plane (2) comprenant deux rainures (12a, 12b) qui s'étendent longitudinalement à distance l'une de l'autre et au moins une ouverture ménagée à chaque extrémité ;
former deux panneaux latéraux (4a, 4b), chaque panneau latéral (4a, 4b) comprenant un bord inférieur droit (8a, 8b) et un bord supérieur incurvé (10a, 10b) ;
extruder une section supérieure (6) formée comme un panneau allongé conçu pour s'étendre sur les bords supérieurs incurvés (10a, 10b) des panneaux latéraux (4a, 4b) et comprenant un moyen de verrouillage (20a) disposé à chaque extrémité (2a, 2b) et conçu pour coopérer avec l'au moins une ouverture disposée à chaque extrémité de la base (2) ; et
assembler le dispositif de formation de voûte (1) de manière à ce que chaque rainure (12a, 12b) de la base (2) reçoive au moins une portion du bord inférieur (8a, 8b) d'un des panneaux latéraux (4a, 4b), chaque rainure (18a. 18b) de la section supérieure (6) reçoive au moins une portion du bord supérieur (10a, 10b) de l'un des panneaux latéraux (4a, 4b) et le moyen de verrouillage (20a) disposé à chaque extrémité (6a, 6b) de la section supérieure (6) forme une liaison avec l'au moins une ouverture ménagée à chaque extrémité de la base (2).

15. Kit de pièces destinées à la fabrication du dispositif de formation de voûte (1) selon l'une quelconque des revendications 1 à 13, ledit kit comprenant : une base allongée plane (2) comprenant deux rainures (12a, 12b) qui s'étendent longitudinalement à distance l'une de l'autre et au moins une ouverture ménagée à chaque extrémité ; deux panneaux latéraux (4a, 4b), chaque panneau latéral (4a, 4b) comprenant un bord inférieur droit (8a, 8b) et un bord supérieur incurvé (10a, 10b) ; et une section supérieure (6), formée comme un panneau allongé conçu pour s'étendre sur les bords supérieurs incurvés (10a, 10b) des panneaux latéraux (4a, 4b) et comprenant un moyen de verrouillage (20a) disposé à chaque extrémité et conçu pour coopérer avec l'au moins une ouverture ménagée à chaque extrémité de la base (2), et deux rainures (18a, 18b) qui s'étendent longitudinalement à distance l'une de l'autre ; chaque rainure (12a, 12b) de la base (2) étant conçue pour recevoir au moins une portion du bord inférieur (8a, 8b) de l'un des panneaux latéraux (4a, 4b), et chaque rainure (18a, 18b) de la section supérieure (6) étant conçue pour recevoir au moins une portion du bord supérieur (10a, 10b) de l'un des panneaux latéraux (4a, 4b).
